# EUROPEAN PATENT SPECIFICATION

(11) **EP 3 366 020 B1**
(45) Date of publication and mention of the grant of the patent: **24.02.2021**
(21) Application number: 15906819.6
(22) Date of filing: 20.10.2015
(51) Int. Cl.: H04L 29/06, H04L 12/46

(54) **SDN CONTROLLER ASSISTED INTRUSION PREVENTION SYSTEMS**
SDN-STEUERGERÄT-UNTERSTÜTZTE EINDRINGUNGSVERHINDERUNGSSYSTEME
SYSTÈMES DE PRÉVENTION D'INTRUSION ASSISTÉS PAR CONTRÔLEUR SDN

(43) Date of publication of application: 29.08.2018
(73) Proprietor: Hewlett Packard Enterprise Development LP, Houston, TX 77070 (US)
(72) Inventor: TANDEL, Sebastien, 90619900 Porto Alegre, Rio Grande do Sul (BR); CORREA, Julio, 90619900 Porto Alegre, Rio Grande do Sul (BR); TAVARES, Kairo, 90619900 Porto Alegre, Rio Grande do Sul (BR)
(74) Representative: Haseltine Lake Kempner LLP
(86) International application number: PCT/US2015/056393
(87) International publication number: WO 2017/069736

(56) References cited:
- WO-A1-2005/112390
- US-A1- 2014 280 834
- US-A1- 2014 280 838
- US-A1- 2014 313 898
- US-B1- 8 006 303
- US-B1- 9 038 151
- US-B2- 8 254 882
- US-B2- 8 255 681

## Description

### BACKGROUND

Instruction prevention systems (IPS) are used to identify and block malicious packets in a computer network. Instruction detection systems (IDS) are used to detect malicious packets, but do not perform any blocking of the malicious packets. For example, the packets may be analyzed to determine if the packet is malicious. If the packet is identified as a malicious packet, the source of the malicious packet may be blocked in the IPS or identified by the IDS.

Malicious packets may disrupt the computer network and affect performance. Portions of the network may also be taken down until the issues are resolved and the malicious packets are no longer being transmitted through the computer network. As a result, customers may experience a drop off in performance.

US9038151 discloses a controller device for a software defined network (SDN) that includes one or more network interfaces configured to communicate with network devices of the SDN, and one or more processors configured to receive credentials from a client device in accordance with a public key infrastructure (PKI)-based authentication protocol, determine one or more policies that are applicable to the client device based on the received credentials, and program network devices of the SDN to enforce the determined policies on a per-packet-flow basis for packet flows including the client device.

US2014/313898 discloses a method for delivering emergency traffic in a SDN based network and an apparatus performing the same. A method for delivering emergency traffic, performed in a controller, may comprise generating an emergency code for delivering the emergency traffic when an emergency state corresponding to a predefined type occurs; transmitting the emergency code to a first OpenFlow switch connected to a transmitting terminal transmitting the emergency traffic; and transmitting a message directing an update of the emergency code to at least one OpenFlow switch included in a forwarding path of the emergency traffic. Therefore, when an emergency state occurs in a network, emergency traffic corresponding to the emergency state may be delivered efficiently, and stabilities of network management and service qualities may be guaranteed accordingly.

WO2005/112390 discloses a system and method for automatically segregating harmful traffic from other traffic at a plurality of network nodes including switches and routers. In the preferred embodiment, the system comprises an intrusion detection system to determine the identity of an intruder and a server adapted to automatically install an isolation rule on the one or more network nodes to quarantine packets from the intruder. The isolation rule in the preferred embodiment is a virtual local area network (VLAN) rule or access control list (ACL) rule that causes the network node to route any packets from the intruder into a quarantine VLAN or otherwise isolate the traffic from other network traffic. In large networks, the isolation rule may be installed on a select plurality of network nodes under the gateway router associated with the node at which the intruder first entered the network.

### BRIEF DESCRIPTION OF THE DRAWINGS

FIG. 1 is a block diagram of an example communication network of the present disclosure;
FIG. 2 is a block diagram of an example software defined network (SDN) controller of the present disclosure; and
FIG. 3 is a flow diagram of an example method for identifying a virtual local area network (VLAN) identification (ID) of a source node sending a malicious packet.

### DETAILED DESCRIPTION

The present disclosure discloses a software defined network (SDN) controller assisted intrusion prevention system. As discussed above, instruction prevention systems (IPS) are used to identify and block malicious packets in a computer network. For example, the packets may be analyzed to determine if the packet is malicious. If the packet is identified as a malicious packet, the source of the malicious packet may be blocked.

Current IPS will block traffic from source nodes that are associated with a particular Internet Protocol (IP) address that is identified by the IPS as being the source of the malicious packets. As a result, current IPS will still consume network resources as malicious packets are still routed through the network to arrive at the IPS for blocking or examination.

The present disclosure provides an example SDN controller assisted IPS that identifies the virtual local area network (VLAN) identification (ID) associated with a source node that is sending the malicious packets to allow the SDN controller to block the malicious packets at the switch. In other words, rather than consuming network resources by the IPS to block traffic from a source node that is identified as sending malicious traffic, the SDN controller can control a switch to selectively block packets from a source node of a plurality of source nodes that share the particular IP address. In other words, the SDN controller can instruct a switch at the edge of the network to block traffic from the source node so that network resources are not consumed by forwarding the malicious packet all the way to the IPS. In the case of an IDS system, the present disclosure may be used to block the malicious traffic that is identified by the IDS system.

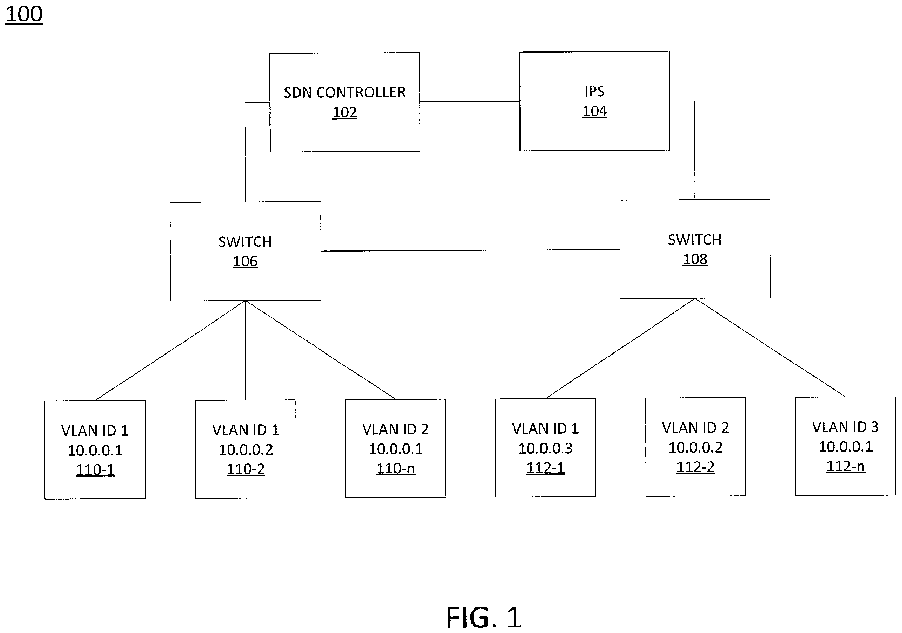

FIG. 1 illustrates a block diagram of an example communication network 100 of the present disclosure. The communication network 100 may be an SDN network. An SDN network may use an SDN controller 102 to separate the data plane and control plane. The SDN controllers are currently used to perform routing functions, but do not perform any intrusion prevention functions. The SDN controller 102 has been modified by the present disclosure to communicate with and to assist an IPS 104, as discussed below. In another implementation, the IPS 104 may be an IDS system that detects, but does not block, malicious packets.

The communication network 100 may include a switch 106 and a switch 108. The switch 106 may be a source switch and the switch 108 may be a destination switch. The switch 106 and the switch 108 may be an edge switch of the communication network 100.

In one example, a plurality of source nodes 110-1 to 110-n (herein also referred to collectively as source nodes 110 or individually as a source node 110) may be in communication with the switch 106. A plurality of destination nodes 112-1 to 112-n may be in communication with the switch 108 (herein also referred to collectively as destination nodes 112 or individually as a destination node 112). In one example, the communication network 100 may use an Open Flow communication protocol to allow the SDN controller 102, the switches 106 and 108, the source nodes 110 and the destination nodes 112 to communicate with one another.

Although only two switches 106 and 108, three source nodes 110 and three destination nodes 112 are illustrated in FIG. 1, it should be noted that any number of switches, source nodes and destination nodes may be deployed. In addition, each switch 106 and 108 may have any number of respective nodes 110 or 112. In addition, each switch 106 and 108 may have the same number of respective nodes 110 and 112 or different numbers of respective nodes 110 and 112.

It should be noted that the communication network 100 has been simplified for ease of explanation. For example, the communication network 100 may include additional network elements (e.g., routers, gateways, switches, firewalls, and the like) and access networks (e.g., a broadband access network, a cellular access network, and the like) that are not shown.

In one implementation, the source nodes 110 and the destination nodes 112 may be any type of processors or hardware devices that are sending a data packet over the communication network 100. In one example, some of the source nodes 110 and some of the destination nodes 112 may share an IP address. For example, the source node 110-1 and 110-n may share an IP address 10.0.0.1.

However, each one of the source nodes 110 and each one of the destination nodes 112 that share an IP address may have a unique VLAN ID. For example, the source nodes 110-1 and 110-n and the destination node 112-n mays share the IP address 10.0.0.1 and may have VLAN IDs 1, 2 and 3, respectively, within the IP address 10.0.0.1. The source node 110-2 and the destination node 112-2 may share the IP address 10.0.0.2 and may have VLAN IDs 1 and 2, respectively, within the IP address 10.0.0.2.

In one example, the SDN controller 102 may redirect packets from the source nodes 110 to the IPS 104 to be examined and to determine whether the packets are malicious packets. When a malicious packet is identified, the IPS 104 may provide the SDN controller 102 with various information associated with the malicious packet. The information may include a source IP address, a source transmission control protocol (TCP)/user datagram protocol (UDP) port, a destination IP address and a destination TCP/UDP port.

As discussed above, detection of a malicious packet would cause previous intrusion prevention systems to block traffic or packets of data from all source nodes having the source IP address associated with the malicious packet. For example, in FIG. 1, if the source IP address was identified as 10.0.0.1, this may have caused the IPS 104 to block traffic from source nodes 110-1 and 110-n even though the source node 110-1 was sending the malicious packets. In addition, network resources would be consumed to forward the malicious packets through the communication network 100 to the IPS 104.

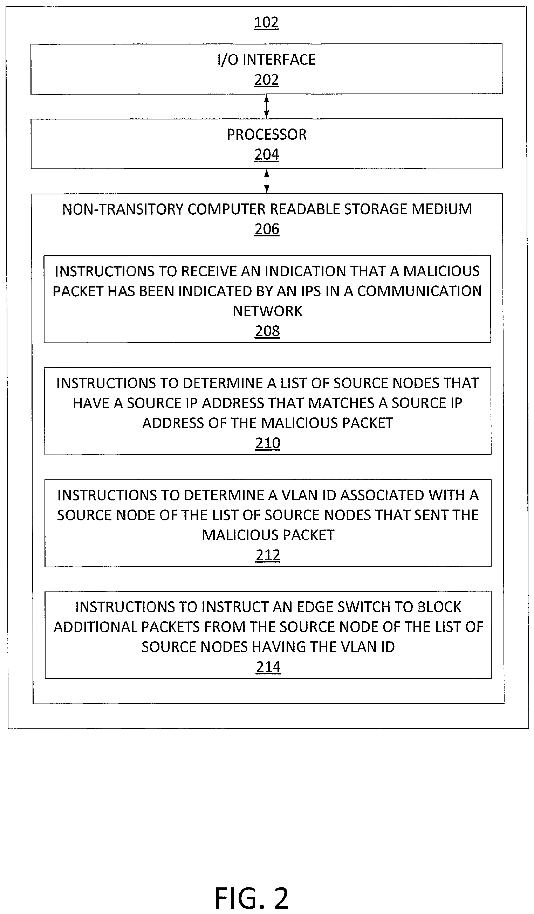

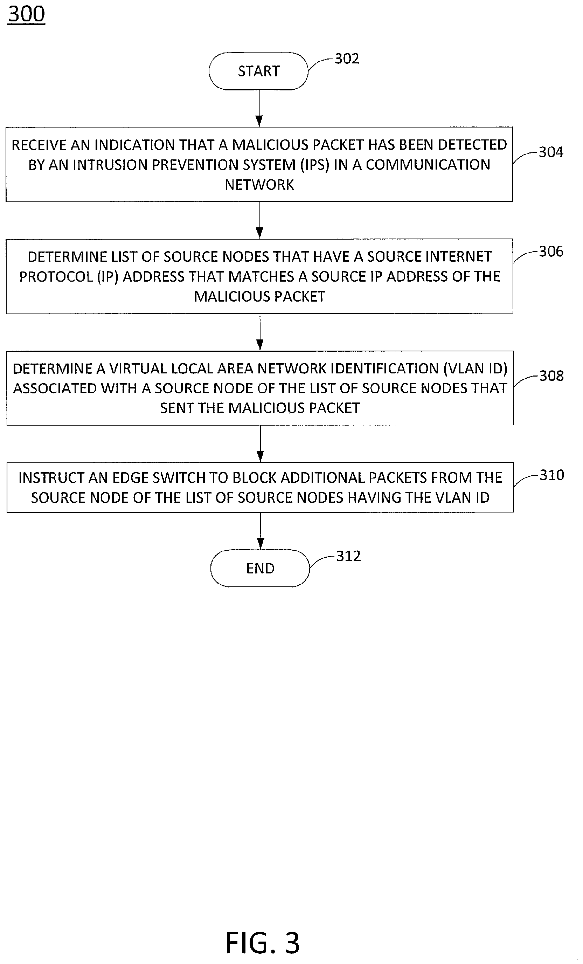

However, the SDN controller 102 of the present disclosure may be in communication with the switches 106 and 108 and the IPS 104. The SDN controller 102 may be modified by the present disclosure to identify the VLAN ID of the source node 110-1, from the source nodes 110-1 and 110-n that share the source IP address that was associated with the malicious packets detected by the IPS 104. The SDN controller 102 may then send an instruction to the switch 106 to block additional packets from the source node 110-1 having the unique VLAN ID that was identified so that only packets from the source node 110-1 is blocked. An example of the SDN controller 102 is illustrated in FIG. 2 and the method for identifying a VLAN ID of a source node sending a malicious packet is described in FIG. 3 below.

FIG. 2 illustrates a block diagram of an example of the SDN controller 102 of the present disclosure. In one example, the SDN controller 102 may include an input/output (I/O) interface 202. The I/O interface 202 may allow for connections to an external device for programming or configuring parameters of the SDN controller 102.

In one example, the SDN controller 102 may include a processor 204. The processor 204 may be a central processing unit (CPU), an application specific integrated controller (ASIC), a micro controller, and the like. The processor 204 may be in communication with the I/O interface 202 and a non-transitory computer readable storage medium 206. The processor 204 may execute the instructions stored in the non-transitory computer readable storage medium 206.

In one example, the non-transitory computer readable storage medium 206 may include instructions 208, 210, 212 and 214. The instructions 208 include instructions to receive an indication that a malicious packet has been detected by an IPS in a communication network. The instructions 210 include instructions to determine a virtual local area network identification (VLAN ID) associated with a source node of the list of source nodes that sent the malicious packet. The instructions 212 include instruction to determine a VLAN ID associated with the list of source nodes. The instructions 214 include instructions to instruct an edge switch to block additional packets from the source node of the list of source nodes having the VLAN ID.

FIG. 3 illustrates a flow diagram of an example method 300 for identifying a VLAN ID of a source node sending a malicious packet. In one example, the blocks of the method 300 may be performed by the SDN controller 102.

At block 302, the method 300 begins. At block 304, the method 300 receives an indication that a malicious packet has been detected by an intrusion prevention system (IPS) in a communication network. For example, the SDN controller may receive the indication or simply listen for events on the IPS. In some implementations, the IPS may raise a security event to notify other applications or network devices that are interested in the security event. The SDN controller may obtain various information when the malicious packet is detected, such as for example, a source IP address, a source transmission control protocol (TCP)/user datagram protocol (UDP) port, a destination IP address and a destination TCP/UDP port.

At block 306, the method 300 determines a list of source nodes that have a source Internet Protocol (IP) address that matches a source IP address of the malicious packet. For example, the source IP address may be associated with many source nodes across an entire communication network. However, the SDN controller may only control a subset of the source nodes that share the source IP address. For example, 200 source nodes may be associated with a particular IP address. However, the SDN controller associated with the IPS that detected the malicious packet may control 50 of the 200 source nodes having the particular IP address. Thus, the SDN controller may determine the list of source nodes under its control that share the source IP address that matches the source IP address of the malicious packet.

At block 308, the method 300 determines a virtual local area network identification (VLAN ID) associated with a source node of the list of source nodes that sent the malicious packet. In one example, if one source node is in the list of source nodes having the particular IP address and the same VLAN ID that is being inspected at the moment, then the VLAN ID may be easily determined from the one source node.

However, in some implementations, the list of source nodes may include a plurality of source nodes each having a different VLAN ID. As a result, the same source node IP address may include a plurality of VLAN IDs. The SDN controller may then perform further processing to identify which one of the plurality of VLAN IDs is the VLAN ID of the source node that is sending the malicious packet.

In one implementation, the SDN controller may determine a list of destination nodes that have a destination IP address that matches a destination IP address of the last malicious event. The SDN controller may then create a plurality of tuples comprising a source node of the list of source nodes, a destination node of the list of destination nodes and a suspected VLAN ID of a plurality of suspected VLAN IDs. In one example, if one source node is in the list of tuples, then the VLAN ID may be determined from the one source node.

If there are still more than one tuple in the list of tuples, the SDN controller may create a rule for each one of the plurality of tuples that diverts an incoming packet to the IPS. For example, the rule may be created by modifying a flow table of each one of the source nodes of the list of source nodes. In one implementation, the tuple may be the matching criteria of the flow table and the action may be to divert the incoming packet to the IPS.

The SDN controller may collect traffic statistics for the rule for each one of the plurality of tuples. The traffic statistics may be collected for a predefined amount of time (e.g., 10 seconds, 1 minute, and the like). In one example, the traffic statistics may include a counter with respect to how many malicious packets have been received from each one of the source nodes in the list of source nodes. In another example, the traffic statistics may include monitoring an amount of traffic generated by the source nodes and determining the amount of traffic is significantly more than a historical baseline for a particular day and a particular time of day. The above are a few examples of traffic statistics that can be collected and it should be noted that other types of traffic statistics may be within the scope of the present disclosure. Based on the traffic statistics, the suspected VLAN ID that generated the most amount of traffic using the rule for the each one of the plurality of tuples may be determined to be the VLAN ID to block.

At block 310, the method 300 instructs an edge switch to block additional packets from the source node of the list of source nodes having the VLAN ID. For example, only packets from the source node having the VLAN ID that was identified in the block 308 may be blocked. Thus, other source nodes having different VLAN IDs, but sharing the IP address associated with the malicious packet that was identified in blocks 304 and 306, may continue to send packets through the communication network.

As a result, the method 300 may selectively block source nodes based on VLAN IDs of the source nodes that share an IP address so that only a minimum number of source nodes is blocked. Consequently, when a malicious packet is detected by the IPS, the performance of the communication network may be minimally affected by selectively blocking the source nodes that share the identified IP address associated with the malicious packet. At block 312, the method 300 ends.

It will be appreciated that variants of the above-disclosed and other features and functions, or alternatives thereof, may be combined into many other different systems or applications. Various presently unforeseen or unanticipated alternatives, modifications, variations, or improvements therein may be subsequently made by those skilled in the art which are also intended to be encompassed by the following claims.

## Claims

1. A method, comprising:
receiving (304), by a processor of a software defined network, SDN, controller, an indication that a malicious packet has been detected by an intrusion prevention system, IPS, in a communication network;
determining (306), by the processor, a list of source nodes that have a source Internet Protocol, IP, address that matches a source IP address of the malicious packet;
determining (308), by the processor, a virtual local area network identification, VLAN ID, associated with a source node of the list of source nodes that sent the malicious packet; and
instructing (310), by the processor, an edge switch to block additional packets from the source node of the list of source nodes having the VLAN ID, wherein when the VLAN ID associated with the list of source nodes comprises a plurality of VLAN IDs, the method further comprising:
determining, by the processor, a list of destination nodes that have a destination IP address that matches a destination IP address of the malicious packet;
creating, by the processor, a plurality of tuples comprising a source node of the list of source nodes, a destination node of the list of destination nodes and a suspected VLAN ID of a plurality of suspected VLAN IDs;
creating, by the processor, a rule for each one of the plurality of tuples that diverts an incoming packet to the IPS;
collecting, by the processor, traffic statistics for the rule for the each one of the plurality of tuples; and
determining, by the processor, the suspected VLAN ID that generated a most amount of traffic using the rule for the each one of the plurality of tuples, is the VLAN ID to block.

2. The method of claim 1, wherein the traffic statistics are collected for a predefined amount of time.

3. The method of claim 1, wherein the creating the rule comprises modifying a flow table to include a match criterion of the tuple and an action to divert the incoming packet to the IPS.

4. The method of claim 1, wherein the indication includes the source IP address, a source transmission control protocol, TCP,/user datagram protocol, UDP, port, a destination IP address and a destination TCP/UDP port.

5. The method of claim 1, wherein the communication network comprises a software defined network, SDN, that uses an Open Flow communication protocol.

6. A software defined network, SDN, controller, comprising:
a processor (204); and
a non-transitory computer-readable storage medium (206) comprising instructions that, when executed by the processor, cause the processor to:
receive (208) an indication that a malicious packet has been detected by an intrusion prevention system, IPS, in a communication network;
determine (210) a list of source nodes that have a source Internet Protocol, IP, address that matches a source IP address of the malicious packet;
determine (212) a virtual local area network identification, VLAN ID, associated with a source node of the list of source nodes that sent the malicious packet; and
instruct (214) an edge switch to block additional packets from the source node of the list of source nodes having the VLAN ID, wherein when the VLAN ID associated with the list of source nodes comprises a plurality of VLAN IDs, the instructions further causing the processor to:
determine a list of destination nodes that have a destination IP address that matches a destination IP address of the malicious packet;
create a plurality of tuples comprising a source node of the list of source nodes, a destination node of the list of destination nodes and a suspected VLAN ID of a plurality of suspected VLAN IDs;
create a rule for each one of the plurality of tuples that diverts an incoming packet to the IPS;
collect traffic statistics for the rule for the each one of the plurality of tuples; and
determine the suspected VLAN ID that generated a most amount of traffic using the rule for the each one of the plurality of tuples, is the VLAN ID to block.

7. The software defined network, SDN, controller of claim 6, wherein the traffic statistics are collected for a predefined amount of time.

8. The software defined network, SDN, controller of claim 6, wherein the rule is created by modifying a flow table to include a match criterion of the tuple and an action to divert the incoming packet to the IPS.

9. The software defined network, SDN, controller of claim 6, wherein the indication includes the source IP address, a source transmission control protocol, TCP,/user datagram protocol, UDP, port, a destination IP address and a destination TCP/UDP port.

10. The software defined network, SDN, controller of claim 6, wherein the communication network comprises a software defined network, SDN, that uses an Open Flow communication protocol.

11. A system, comprising:
a plurality of source nodes (110-1 - 110-n), wherein each one of the plurality of source nodes has a unique virtual local area network identification, VLAN ID, wherein two or more of the plurality of source nodes share a source Internet Protocol, IP, address;
a switch (106, 108) in communication with the plurality of source nodes;
a software defined network, SDN, controller (102) in communication with the switch and an intrusion protection system, IPS, (104), wherein the SDN controller identifies the unique VLAN ID associated with a source node of the two or more of the plurality of source nodes that share the source IP address associated with a malicious packet detected by the IPS and instructs the switch to block additional packets from the source node having the unique VLAN ID, wherein the unique VLAN ID associated with the source node comprises a plurality of the unique VLAN IDs, the SDN controller is further configured to:
determine a list of destination nodes that have a destination IP address that matches a destination IP address of the malicious packet;
create a plurality of tuples comprising a source node of the two or more of the plurality of source nodes, a destination node of the list of destination nodes and a suspected VLAN ID of a plurality of suspected VLAN IDs;
create a rule for each one of the plurality of tuples that diverts an incoming packet to the IPS;
collect traffic statistics for the rule for the each one of the plurality of tuples; and
determine the suspected VLAN ID that generated a most amount of traffic using the rule for the each one of the plurality of tuples, is the unique VLAN ID to block.

12. The system of claim 11, wherein the plurality of source nodes, the switch and the SDN controller communicate using an Open Flow communication protocol.

## Patentansprüche

1. Verfahren, das Folgendes umfasst:
Empfangen (304), durch einen Prozessor einer Steuerung eines softwaredefinierten Netzes (*Software Defined Network* - SDN), einer Anzeige, dass ein bösartiges Datenpaket durch ein Eindringverhinderungssystem (*Intrusion Prevention System* - IPS) in einem Kommunikationsnetz erfasst wurde;
Bestimmen (306), durch den Prozessor, einer Liste von Quellknoten, die eine Quell-Internetprotokoll (*Internet Protocol* - IP)-Adresse aufweisen, die mit einer Quell-IP-Adresse des bösartigen Datenpakets übereinstimmt;
Bestimmen (308), durch den Prozessor, einer virtuellen lokalen Netzidentifikation (*Virtual Local Area Network Identification* - VLAN ID), die einem Quellknoten der Liste von Quellknoten zugeordnet ist, der das bösartige Datenpaket gesendet hat; und
Anweisen (310), durch den Prozessor, eines Edge-Switches, zusätzliche Datenpakete von dem Quellknoten der Liste von Quellknoten mit der VLAN-ID zu blockieren, wobei, wenn die VLAN-ID, die der Liste von Quellknoten zugeordnet ist, mehrere VLAN-IDs umfasst, das Verfahren ferner Folgendes umfasst:
Bestimmen, durch den Prozessor, einer Liste von Zielknoten, die eine Ziel-IP-Adresse aufweisen, die mit einer Ziel-IP-Adresse des bösartigen Datenpakets übereinstimmt;
Erzeugen, durch den Prozessor, mehrerer Tupel, die einen Quellknoten der Liste der Quellknoten, einen Zielknoten der Liste der Zielknoten und eine verdächtige VLAN-ID von mehreren verdächtigen VLAN-IDs umfassen;
Erzeugen, durch den Prozessor, einer Regel fürjedes der mehreren Tupel, die ein ankommendes Datenpaket an das IPS umleitet;
Sammeln, durch den Prozessor, von Datenverkehrsstatistiken für die Regel fürjedes der mehreren Tupel; und
Bestimmen, durch den Prozessor, dass die verdächtige VLAN-ID, die das größte Aufkommen an Datenverkehr erzeugt hat, unter Verwendung der Regel für jedes der mehreren Tupel, die zu blockierende VLAN-ID ist.

2. Verfahren nach Anspruch 1, wobei die Datenverkehrsstatistiken füreine vordefinierte Zeitdauer gesammelt werden.

3. Verfahren nach Anspruch 1, wobei das Erzeugen der Regel ein Modifizieren einer Flow-Tabelle beinhaltet, um ein Übereinstimmungskriterium des Tupels und eine Aktion zu beinhalten, um das eingehende Datenpaket an das IPS umzuleiten.

4. Verfahren nach Anspruch 1, wobei die Anzeige die Quell-IP-Adresse, einen Quell-Übertragungssteuerungsprotokoll (*Transmission Control Protocol* - TCP)/Benutzerdatagrammprotokoll (*UserDatagramProtocol -* UDP)-Anschluss, eine Ziel-IP-Adresse und einen Ziel-TCP/UDP-Anschluss beinhaltet.

5. Verfahren nach Anspruch 1, wobei das Kommunikationsnetz ein softwaredefiniertes Netz (SDN) umfasst, das ein Open-Flow-Kommunikationsprotokoll verwendet.

6. Steuerung eines softwaredefinierten Netzes (SDN), die Folgendes umfasst:
einen Prozessor (204); und
ein nicht flüchtiges, computerlesbares Speichermedium (206), das Anweisungen umfasst, die, wenn sie durch den Prozessor ausgeführt werden, den Prozessor zu Folgendem veranlassen:
Empfangen (208) einer Anzeige, dass ein bösartiges Datenpaket von einem Eindringverhinderungssystem (IPS) in einem Kommunikationsnetz erfasst wurde;
Bestimmen (210) einer Liste von Quellknoten mit einer Quell-lnternetprotokoll(IP)-Adresse, die mit einer Quell-IP-Adresse des bösartigen Datenpakets übereinstimmt;
Bestimmen (212) einer virtuellen lokalen Netzidentifikation (VLAN-ID), die einem Quellknoten der Liste der Quellknoten zugeordnet ist, der das bösartige Datenpaket gesendet hat; und
Anweisen (214) eines Edge-Switchs, zusätzliche Datenpakete von dem Quellknoten der Liste der Quellknoten mit der VLAN-ID zu blockieren, wobei, wenn die VLAN-ID, die der Liste der Quellknoten zugeordnet sind, mehrere VLAN-IDs umfasst, die Anweisungen den Prozessor ferner zu Folgendem veranlassen:
Bestimmen einer Liste von Zielknoten, die eine Ziel-IP-Adresse aufweisen, die mit einer Ziel-IP-Adresse des bösartigen Datenpakets übereinstimmt;
Erzeugen mehrererTupel, die einen Quellknoten der Liste der Quellknoten, einen Zielknoten der Liste der Zielknoten und eine verdächtige VLAN-ID von mehreren verdächtigen VLAN-IDs umfassen;
Erzeugen einer Regel für jedes der mehreren Tupel, die ein eingehendes Datenpaket an das IPS umleitet;
Sammeln von Datenverkehrstatistiken für die Regel für jedes der mehreren Tupel; und
Bestimmen, dass die verdächtige VLAN-ID, die das größte Aufkommen an Datenverkehr erzeugt hat, unter Verwendung der Regel für jedes der mehreren Tupel, die zu blockierende VLAN-ID ist.

7. Steuerung eines softwaredefinierten Netzes (SDN) nach Anspruch 6, wobei die Datenverkehrsstatistiken für eine vordefinierte Zeitdauer gesammelt werden.

8. Steuerung eines softwaredefinierten Netzes (SDN) nach Anspruch 6, wobei die Regel durch Modifizieren einer Flow-Tabelle erzeugt wird, um ein Übereinstimmungskriterium des Tupels und eine Aktion zu beinhalten, um das eingehende Datenpaket an das IPS umzuleiten.

9. Steuerung eines softwaredefinierten Netzes (SDN) nach Anspruch 6, wobei die Anzeige die Quell-IP-Adresse, einen Quell-Übertragungssteuerungsprotokoll(TCP)/Benutzerdatagrammprotokoll(UDP)-Anschluss, eine Ziel-IP-Adresse und einen Ziel-TCP/UDP-Anschluss umfasst.

10. Steuerung eines softwaredefinierten Netzes (SDN) nach Anspruch 6, wobei das Kommunikationsnetz ein softwaredefiniertes Netz (SDN) umfasst, das ein Open-Flow-Kommunikationsprotokoll verwendet.

11. System, das Folgendes umfasst:
mehrere Quellknoten (110-1 - 110-n), wobei jeder der mehreren Quellknoten eine eindeutige virtuelle lokale Netzidentifikation (VLAN-ID) aufweist, wobei zwei oder mehr der mehreren Quellknoten eine Quell-lnternetprotokoll(IP)-Adresse gemeinsam nutzen;
einen Switch (106, 108), der mit den mehreren Quellknoten kommuniziert;
eine Steuerung eines softwaredefinierten Netzes (SDN)-(102), die mit dem Switch und einem Eindringschutzsystem (IPS) (104) kommuniziert, wobei die SDN-Steuerung die eindeutige VLAN-ID identifiziert, die einem Quellknoten derzwei oder mehr der mehreren Quellknoten zugeordnet ist, die die Quell-IP-Adresse gemeinsam nutzen, die einem bösartigen Datenpaket zugeordnet ist, das durch das IPS erfasst wird, und den Switch anweist, zusätzliche Datenpakete von dem Quellknoten zu blockieren, der die eindeutige VLAN-ID aufweist, wobei die eindeutige VLAN-ID, die dem Quellknoten zugeordnet ist, mehrere der eindeutigen VLAN-IDs umfasst, wobei die SDN-Steuerung ferner für Folgendes konfiguriert ist:
Bestimmen einer Liste von Zielknoten, die eine Ziel-IP-Adresse aufweisen, die mit einer Ziel-IP-Adresse des bösartigen Datenpakets übereinstimmt;
Erzeugen mehrererTupel, die einen Quellknoten der zwei oder mehr der mehreren Quellknoten, einen Zielknoten der Liste der Zielknoten und eine verdächtige VLAN-ID von mehreren verdächtigen VLAN-IDs umfassen;
Erzeugen einer Regel für jedes der mehreren Tupel, die ein eingehendes Datenpaket an das IPS umleitet;
Sammeln von Datenverkehrstatistiken für die Regel für jedes der mehreren Tupel; und
Bestimmen, dass die verdächtige VLAN-ID, die das größte Aufkommen an Datenverkehr erzeugt hat, unter Verwendung der Regel für jedes der mehreren Tupel, die zu blockierende eindeutige VLAN-ID ist.

12. System nach Anspruch 11, wobei die mehreren Quellknoten, der Switch und die SDN - Steuerung unter Verwendung eines Open-Flow-Kommunikationsprotokolls kommunizieren.

## Revendications

1. Procédé comprenant :
la réception (304), par un processeur d'un contrôleur de réseau àdéfinition logicielle, SDN, d'une indication qu'un paquet malveillant a été détecté par un système de prévention d'intrusion, IPS, dans un réseau de communication ;
la détermination (306), par le processeur, d'une liste de nœuds source ayant une adresse de protocole internet, IP, source, qui correspond à une adresse IP source du paquet malveillant ;
la détermination (308), par le processeur, d'une identification de réseau local virtuel, ID de VLAN, associée à un nœud source de la liste de nœuds source ayant envoyé le paquet malveillant ; et
l'instruction (310), par le processeur, à un commutateur de périphérie de bloquer des paquets supplémentaires provenant du nœud source de la liste de nœuds source ayant l'ID de VLAN, dans lequel lorsque l'ID de VLAN associé à la liste de nœuds source comprend une pluralité d'ID de VLAN, le procédé comprenant en outre :
la détermination, par le processeur, d'une liste de nœuds de destination ayant une adresse IP de destination qui correspond à une adresse IP de destination du paquet malveillant ;
la création, par le processeur, d'une pluralité d'uplets comprenant un nœud source de la liste de nœuds source, un nœud de destination de la liste de nœuds de destination et un ID de VLAN suspecté d'une pluralité d'ID de VLAN suspectés ;
la création, par le processeur, d'une règle pour chacun de la pluralité d'uplets qui détourne un paquet entrant vers l'IPS ;
la collecte, par le processeur, des statistiques de trafic pour la règle pour chacun de la pluralité d'uplets ; et
la détermination, par le processeur, que l'ID de VLAN suspecté ayant généré la plus grande quantité de trafic à l'aide de la règle pour chacun de la pluralité d'uplets, est l'ID de VLAN à bloquer.

2. Procédé selon la revendication 1, dans lequel les statistiques de trafic sont collectées pendant une durée prédéfinie.

3. Procédé selon la revendication 1, dans lequel la création de la règle comprend la modification d'une table de flux pour inclure un critère de correspondance de l'uplet et une action pour détourner le paquet entrant vers l'IPS.

4. Procédé selon la revendication 1, dans lequel l'indication comprend l'adresse IP source, un protocole de contrôle de transmission, TCP, source/port de protocole de datagramme utilisateur, UDP, une adresse IP de destination et un port de TCP/UDP de destination.

5. Procédé selon la revendication 1, dans lequel le réseau de communication comprend un réseau à définition logicielle, SDN, utilisant un protocole de communication OpenFlow.

6. Contrôleur de réseau à définition logicielle, SDN, comprenant :
un processeur (204) ; et
un support de stockage non transitoire lisible par ordinateur (206) comprenant des instructions qui, lorsqu'elles sont exécutées par le processeur, amènent le processeur à :
recevoir (208) une indication qu'un paquet malveillant a été détecté par un système de prévention d'intrusion, IPS, dans un réseau de communication ;
déterminer (210) une liste de nœuds source ayant une adresse de protocole internet, IP, qui correspond à une adresse IP source du paquet malveillant ;
déterminer (212) une identification de réseau local virtuel, ID de VLAN, associée à un nœud source de la liste de nœuds source ayant envoyé le paquet malveillant ; et
donner l'instruction (214) à un commutateur de périphérie de bloquer des paquets supplémentaires provenant du nœud source de la liste de nœuds source ayant l'ID de VLAN, dans lequel lorsque l'ID de VLAN associé à la liste de nœuds source comprend une pluralité d'ID de VLAN, les instructions amènent en outre le processeurà :
déterminer une liste de nœuds de destination ayant une adresse IP de destination qui correspond à une adresse IP de destination du paquet malveillant ;
créer une pluralité d'uplets comprenant un nœud source de la liste de nœuds source, un nœud de destination de la liste de nœuds de destination et un ID de VLAN suspecté d'une pluralité d'ID de VLAN suspectés ;
créer une règle pour chacun de la pluralité d'uplets qui détourne un paquet entrant vers l'IPS ;
collecter des statistiques de trafic pour la règle pour chacun de la pluralité d'uplets ; et
déterminer que l'ID VLAN suspecté ayant généré le plus de trafic à l'aide de la règle pour chacun de la pluralité d'uplets, est l'ID de VLAN à bloquer.

7. Contrôleur de réseau à définition logicielle, SDN, selon la revendication 6, dans lequel les statistiques de trafic sont collectées pendant une durée prédéfinie.

8. Contrôleur de réseau à définition logicielle, SDN, selon la revendication 6, dans lequel la règle est créée en modifiant une table de flux pour inclure un critère de correspondance de l'uplet et une action pour détourner le paquet entrant vers l'IPS.

9. Contrôleur de réseau à définition logicielle, SDN, selon la revendication 6, dans lequel l'indication comprend l'adresse IP source, un protocole de contrôle de transmission, TCP, source/port de protocole de datagramme utilisateur, UDP, une adresse IP de destination et un port de TCP/UDP de destination.

10. Contrôleur de réseau à définition logicielle, SDN, selon la revendication 6, dans lequel le réseau de communication comprend un réseau à définition logicielle, SDN, utilisant un protocole de communication OpenFlow.

11. Système, comprenant :
une pluralité de nœuds source (110-1 à 110-n), chacun de la pluralité de nœuds source ayant une identification de réseau local virtuel, ID de VLAN, unique, dans lequel deux ou plusieurs de la pluralité de nœuds source partagent une adresse de protocole internet, IP, source ;
un commutateur (106, 108) en communication avec la pluralité de nœuds source ;
un contrôleur de réseau à définition logicielle, SDN, (102) en communication avec le commutateur et un système de prévention d'intrusion, IPS, (104), dans lequel le contrôleur de SDN identifie l'ID de VLAN unique associé àun nœud source des deux ou plus de la pluralité de nœuds source qui partagent l'adresse IP source associée à un paquet malveillant détecté par l'IPS et donne l'instruction au commutateur de bloquer les paquets supplémentaires du nœud source ayant l'ID de VLAN unique, dans lequel l'ID de VLAN unique associé au nœud source comprend une pluralité des ID de VLAN uniques, le contrôleur SDN est en outre configuré pour :
déterminer une liste de nœuds de destination ayant une adresse IP de destination qui correspond à une adresse IP de destination du paquet malveillant ;
créer une pluralité d'uplets comprenant un nœud source des deux ou plus de la pluralité de nœuds source, un nœud de destination de la liste de nœuds de destination et un ID de VLAN suspecté d'une pluralité d'ID de VLAN suspectés ;
créer une règle pour chacun de la pluralité d'uplets qui détourne un paquet entrant vers l'IPS ;
collecter des statistiques de trafic pour la règle pour chacun de la pluralité d'uplets ; et
déterminer que l'ID de VLAN suspecté ayant généré le plus de trafic à l'aide de la règle pour chacun de la pluralité d'uplets, est l'ID de VLAN unique à bloquer.

12. Système selon la revendication 11, dans lequel la pluralité de nœuds source, le commutateur et le contrôleur SDN communiquent à l'aide un protocole de communication OpenFlow.
